# EUROPÄISCHE PATENTSCHRIFT

(11) **EP 2 868 429 B1**
(45) Veröffentlichungstag und Bekanntmachung des Hinweises auf die Patenterteilung: **03.07.2019**
(21) Anmeldenummer: 14189471.7
(22) Anmeldetag: 20.10.2014
(51) Int. Cl.: B23Q 1/00, B23Q 17/00

(54) **Kupplungsvorrichtung und Kupplungsanordnung zum Verbinden zweier Bauteile einer maschinellen Anordnung für die Werkstückbearbeitung, insbesondere für die Blechbearbeitung**
Coupling device and coupling system for connecting two components of a mechanical assembly for workpiece machining, in particular for sheet metal machining
Dispositif d'accouplement et système d'accouplement destinés à relier deux composants d'un agencement mécanique pour le traitement de pièce, en particulier pour le traitement de tôle

(30) Priorität: 30.10.2013 DE 102013222089
(43) Veröffentlichungstag der Anmeldung: 06.05.2015
(73) Patentinhaber: Trumpf Sachsen GmbH, 01904 Neukirch (DE)
(72) Erfinder: Krause, Stefan, 02681 Wilthen (DE); Höer, Matthias, 01904 Weifa (DE)
(74) Vertreter: Kohler Schmid Möbus Patentanwälte

(56) Entgegenhaltungen:
- EP-A1- 1 321 221
- EP-A1- 2 052 808
- EP-A2- 1 175 959
- DE-A1-102008 005 131

## Beschreibung

Die Erfindung betrifft eine Kupplungsvorrichtung zum Verbinden zweier Bauteile einer maschinellen Anordnung für die Werkstückbearbeitung, insbesondere für die Blechbearbeitung,
- mit einer dem einen der beiden Bauteile zugeordneten Kupplungsaufnahme und einem dem anderen der beiden Bauteile zugeordneten Kupplungsvorsprung, der in die Kupplungsaufnahme eingreift,
- mit Kupplungselementen in Form eines aufnahmeseitigen Kupplungselements an der Kupplungsaufnahme und eines vorsprungseitigen Kupplungselements an dem in die Kupplungsaufnahme eingreifenden Kupplungsvorsprung, wobei die Kupplungselemente mittels einer Schaltvorrichtung in einen Kupplungszustand schaltbar sind, in welchem die beiden Bauteile über die Kupplungselemente aneinander festgelegt sind sowie
- mit einer Verriegelungsvorrichtung, die in einen Verriegelungszustand schaltbar ist, in welchem die Verriegelungsvorrichtung die in den Kupplungszustand geschalteten Kupplungselemente gegen Verlassen des Kupplungszustands sichert und die als Verriegelungselement einen Verriegelungskolben aufweist, der in einem Verriegelungszylinder in eine dem Verriegelungszustand der Verriegelungsvorrichtung zugeordnete Verriegelungsposition bewegbar geführt ist,
- wobei für den Verriegelungskolben der Verriegelungsvorrichtung eine Positionserfassungsvorrichtung vorgesehen ist, mittels derer feststellbar ist, ob der Verriegelungskolben in die Verriegelungsposition bewegt ist oder nicht,
- wobei die Positionserfassungsvorrichtung einen Messraum und einen Druckmesser aufweist,
- wobei der Messraum mittels des in die Verriegelungsposition bewegten Verriegelungskolbens abgedichtet ist und der Innendruck des Messraums bei in die Verriegelungsposition bewegtem Verriegelungskolben einen Sollwert aufweist,
- wobei mittels des Druckmessers der Innendruck des Messraums messbar ist und
- wobei als Kupplungsvorsprung ein als Hohlzapfen ausgebildeter Kupplungszapfen vorgesehen ist und ein Längenabschnitt des Kupplungszapfens den Verriegelungszylinder zur Führung des Verriegelungskolbens bildet, wobei eine Bewegungsachse des Verriegelungskolbens in Längsrichtung des Kupplungszapfens verläuft.

Die Erfindung betrifft des Weiteren eine Kupplungsanordnung die eine Mehrzahl von Kupplungsvorrichtungen der vorstehenden Art umfasst.

Gattungsgemäßer Stand der Technik ist bekannt aus DE 10 2008 005 131 A1. Diese Druckschrift betrifft eine Kupplungsvorrichtung mit einem Kupplungszapfen in Form eines Kegelgehäuses, in dem ein Schiebeelement als Verriegelungskolben geführt ist. Druckräume, die zur Positionserfassung des Schiebeelements genutzt werden sind seitlich neben dem Schiebeelement ausgebildet.

Weiterer Stand der Technik ist offenbart in EP 1 321 221 A1. Diese Druckschrift offenbart eine Spanneinrichtung mit einem Spannfutter und einem lösbar daran fixierbaren Werkstückträger. Die Verbindung zwischen dem Werkstückträger und dem Spannfutter wird mittels einer Kupplungsvorrichtung hergestellt, die eine an dem Spannfutter vorgesehene Kupplungshülse und einen an dem Werkstückträger vorgesehenen Kupplungszapfen umfasst. Der Kupplungszapfen an dem Werkstückträger wird mit einer Bewegung in Richtung seiner Längsachse in die Kupplungshülse an dem Spannfutter eingeführt, bis der Werkstückträger an dem Spannfutter zur Anlage kommt. Danach wird ein im Innern des Spannfutters vorgesehener Kolben parallel zu der Längsachse des Kupplungszapfens verschoben. Dabei beaufschlagt der Kolben mit einer konischen, gegen die Längsachse des Kupplungszapfens geneigten Fläche eine Mehrzahl von Kugeln, die an dem Spannfutter um den Außenumfang der Kupplungshülse verteilt und dabei quer zu der Längsachse des Kupplungszapfens beweglich sind. Infolge der Beaufschlagung durch die konische Fläche des Kolbens verlagern sich die Kugeln in radialer Richtung des Kupplungszapfens zu diesem hin und ragen schließlich jeweils mit einer Kugelkalotte durch Öffnungen der Kupplungshülse in deren Inneres. Dabei hintergreifen die an der Kupplungshülse abgestützten Kugeln eine an dem Kupplungszapfen in dessen Umfangsrichtung verlaufende Schulter. Durch diesen Hintergriff sind der Kupplungszapfen und der mit diesem verbundene Werkstückträger gegen eine Bewegung in Gegenrichtung der Einführbewegung des Kupplungszapfens blockiert. Die damit in der Kupplungsstellung befindlichen Kugeln werden durch die sie beaufschlagende konische Fläche des Kolbens an einer Rückstellbewegung in die Position gehindert, die sie vor der Herstellung des Hintergriffs mit der Schulter an dem Kupplungszapfen eingenommen haben. Einer Rückstellbewegung des Kolbens, aufgrund derer die Kugeln zum Verlassen der Kupplungsstellung freigegeben würden, wirken Federn entgegen, welche den Kolben in Längsrichtung des Kupplungszapfens beaufschlagen.

Die Aufgabe der vorliegenden Erfindung besteht ausgehend von dem gattungsgemäßen Stand der Technik darin, eine Kupplungsvorrichtung mit einer möglichst platzsparenden Bauweise bereitzustellen.

Erfindungsgemäß gelöst wird diese Aufgabe durch die Kupplungsvorrichtung nach Patentanspruch 1 und die Kupplungsanordnung nach Patentanspruch 6.

Gemäß Patentanspruch 1 weist der als Verriegelungselement vorgesehene Verriegelungskolben der für die Kupplungselemente vorgesehenen Verriegelungsvorrichtung eine Positionserfassungsvorrichtung auf, mittels derer sich feststellen lässt, ob der Verriegelungskolben in die Verriegelungsposition bewegt ist oder nicht. Auf diese Art und Weise kann geprüft werden, ob der zuvor ausgeführte Kupplungsvorgang auch tatsächlich zu dem gewünschten Ergebnis, nämlich zu der angestrebten Verbindung der beiden Bauteile einer maschinellen Anordnung für die Werkstückbearbeitung, geführt hat. Diese Überprüfungsmöglichkeit ist insbesondere in Fällen von großer Bedeutung, in denen die gewünschte Bauteilverbindung automatisiert und folglich weitestgehend mannlos hergestellt wird. Die erfasste Position des Verriegelungskolbens indiziert den Sicherungszustand der Verriegelungsvorrichtung und somit den Schaltzustand der Kupplungselemente. Nach dem Überführen des Verriegelungskolbens in die Verriegelungsposition kann die Positionserfassungsvorrichtung dazu genutzt werden, die Beibehaltung der Verriegelungsposition des Verriegelungskolbens und die Aufrechterhaltung der Sicherung des Kupplungszustands der Kupplungselemente zu überwachen.

Der Verriegelungskolben ist bei der Bewegung in die Verriegelungsposition in einem Verriegelungszylinder geführt. Eine funktionssichere Bewegung des Verriegelungskolbens in die den Kupplungszustand der Kupplungselemente sichernde Verriegelungsposition kann auf diese Art und Weise gewährleistet werden. Dabei ist die Verriegelungsvorrichtung in den Kupplungsvorsprung integriert, indem der Kupplungsvorsprung insbesondere den Verriegelungszylinder zur Führung des Verriegelungskolbens bildet.

Es wird der Innendruck eines Messraums überwacht, der mittels des in die Verriegelungsposition bewegten Verriegelungskolbens abgedichtet ist. Befindet sich der Verriegelungskolben in der Verriegelungsposition, so nimmt der Innendruck des Messraums einen Sollwert an. Weicht der Innendruck des Messraums von diesem Sollwert ab, so indiziert dies, dass sich der Verriegelungskolben nicht in der Verriegelungsposition befindet und dementsprechend die Kupplungselemente nicht im Kupplungszustand gesichert sind.

Die Messung des Innendrucks des Messraums erfolgt mit räumlichem Abstand von dem Verriegelungskolben der Verriegelungsvorrichtung. Dementsprechend kann die Prüfung bzw. Überwachung des Funktionszustandes der Verriegelungsvorrichtung und der Kupplungselemente von diesen beabstandet durchgeführt werden. Dadurch ermöglicht wird insbesondere eine platzsparende Bauweise der erfindungsgemäßen Kupplungsvorrichtung im Bereich der Kupplungselemente, des Kupplungsvorsprungs und der Kupplungsaufnahme.

Es ist grundsätzlich denkbar, den Funktionszustand der Verriegelungsvorrichtung und der Kupplungselemente der Kupplungsvorrichtung durch Erzeugung eines der Verriegelungsposition des Verriegelungskolbens zugeordneten Überdrucks in dem Messraum zu überwachen. Erfindungsgemäß erfolgt die Überwachung des Funktionszustandes der Verriegelungsvorrichtung und der Kupplungselemente anhand eines Unterdrucks im Innern des Messraums.

Im Interesse eines möglichst einfachen konstruktiven Aufbaus der erfindungsgemäßen Kupplungsvorrichtung wird die Bewegung des Verriegelungskolbens in die Verriegelungsstellung mittels einer vorgespannten Feder, vorzugsweise mittels einer vorgespannten Schraubenfeder, erzeugt.

Zur Überführung des durch den Verriegelungskolben gesicherten Kupplungselementes aus dem Kupplungszustand in einen Außerfunktionszustand und dementsprechend zum Lösen der über das Kupplungselement hergestellten Bauteilverbindung ist erfindungsgemäß für den Verriegelungskolben eine Rückstellvorrichtung vorgesehen, mittels derer der Verriegelungskolben aus der Verriegelungsposition in eine Entriegelungsposition bewegbar ist. In der Entriegelungsposition gibt der Verriegelungskolben das zuvor gesicherte Kupplungselement zur Aufhebung des Kupplungszustands frei.

Besondere Ausführungsarten der in den unabhängigen Patentansprüchen beschriebenen Erfindung ergeben sich aus den abhängigen Patentansprüchen 2 bis 5 und 7.

In Abhängigkeit vom Ergebnis der durchgeführten Positionserfassung kann erfindungsgemäß auf die sich an die Positionserfassung anschließenden Abläufe an der mit den zu verbindenden Bauteilen versehenen maschinellen Anordnung Einfluss genommen werden. Zu diesem Zweck weist die Positionserfassungsvorrichtung für den Verriegelungskolben der Verriegelungsvorrichtung gemäß Patentanspruch 2 eine Auswertevorrichtung auf, welche die mittels der Positionserfassungsvorrichtung ermittelte tatsächliche Position des Verriegelungskolbens mit der Verriegelungsposition vergleicht und die in Abhängigkeit von dem Ergebnis des Positionsvergleichs ein Steuersignal für eine Funktionseinheit der mit der Kupplungsvorrichtung versehenen maschinellen Anordnung erzeugt. Aufgrund dieses Steuersignals kann etwa eine Anzeigevorrichtung betätigt werden, an welcher der momentane Zustand der Kupplungsvorrichtung erkennbar ist. Denkbar ist beispielsweise auch die Erzeugung eines Steuersignals die im Falle der Feststellung einer Abweichung der tatsächlichen Position des Verriegelungskolbens von der Verriegelungsposition ein Warnsignal generiert und/oder einen weiteren Betrieb der mit den beiden zu verbindenden Bauteilen versehenen maschinellen Anordnung unterbindet.

Im Interesse einer möglichst einfachen konstruktiven Ausführung und einer möglichst platzsparenden Bauweise wird der Verriegelungskolben der Verriegelungsvorrichtung im Falle der Erfindungsbauart nach Patentanspruch 3 auch als Schaltelement der für die Kupplungselemente vorgesehenen Schaltvorrichtung genutzt. Auf dem Weg in die Verriegelungsposition überführt der Verriegelungskolben zunächst die Kupplungselemente in den Kupplungszustand. Befindet sich der Verriegelungskolben in der Verriegelungsposition, sind die Kupplungselemente in den Kupplungszustand überführt.

Zur konstruktiven Umsetzung der Doppelfunktion des Verriegelungskolbens sieht Patentanspruch 4 vor, dass der Verriegelungskolben mit dem zu schaltenden Kupplungselement über ein Keilgetriebe mit wenigstens einer gegen die Bewegungsrichtung des Verriegelungskolbens geneigten Keilfläche antriebsverbunden ist und dass mittels des Keilgetriebes eine Bewegung des Verriegelungskolbens in die Verriegelungsposition umgesetzt wird in eine quer zu der Bewegungsrichtung des Verriegelungskolbens gerichtete Bewegung des Kupplungselements in die Kupplungsposition.

Gemäß Patentanspruch 5 umfasst das zwischen dem Verriegelungskolben der Verriegelungsvorrichtung und dem betreffenden Kupplungselement vorgesehene Keilgetriebe eine Getriebefläche an dem Verriegelungskolben, die bei der Bewegung des Verriegelungskolbens in die Verriegelungsposition einer an dem Verriegelungskolben in Bewegungsrichtung verlaufenden Verriegelungsfläche vorauseilt. Ist der Verriegelungskolben in die Verriegelungsposition überführt und befindet sich das mittels des Verriegelungskolbens geschaltete Kupplungselement folglich im Kupplungszustand, so ist das Kupplungselement mit einer Kraft an der Verriegelungsfläche des Verriegelungskolbens abgestützt, deren Wirkungslinie im Wesentlichen senkrecht zu der Verriegelungsfläche und somit auch senkrecht zu der Bewegungsrichtung des Verriegelungskolbens verläuft. Aufgrund dieses Verlaufs der Wirkungslinie der Abstützkraft ist ausgeschlossen, dass die von dem Kupplungselement auf die Verriegelungsfläche des Verriegelungskolbens ausgeübte Abstützkraft eine Rückstellbewegung des in der Verriegelungsstellung befindlichen Verriegelungskolbens und dadurch eine Aufhebung der Sicherung des Kupplungszustands der Kupplungselemente bewirkt.

Patentanspruch 7 betrifft eine erfindungsgemäße Kupplungsanordnung, deren Kupplungsvorrichtungen zur Minimierung des erforderlichen konstruktiven Aufwands einen gemeinsamen Messraum mit einem gemeinsamen Druckmesser zur Überwachung des Innendrucks des gemeinsamen Messraums aufweisen. Nachfolgend wird die Erfindung anhand beispielhafter schematischer Darstellungen näher erläutert. Es zeigen:
- Figur 1: eine Kupplungsvorrichtung zum Verbinden zweier Bauteile einer maschinellen Anordnung für die Blechbearbeitung im Ausgangszustand,
- Figur 2: die Kupplungsvorrichtung gemäß Figur 1 mit Kupplungselementen im Kupplungszustand,
- Figur 3: die Kupplungsvorrichtung gemäß den Figuren 1 und 2 mit einer gegenüber Figur 2 geänderten Darstellungsebene und
- Figur 4: das Detail IV in Figur 3 in vergrößerter Darstellung.

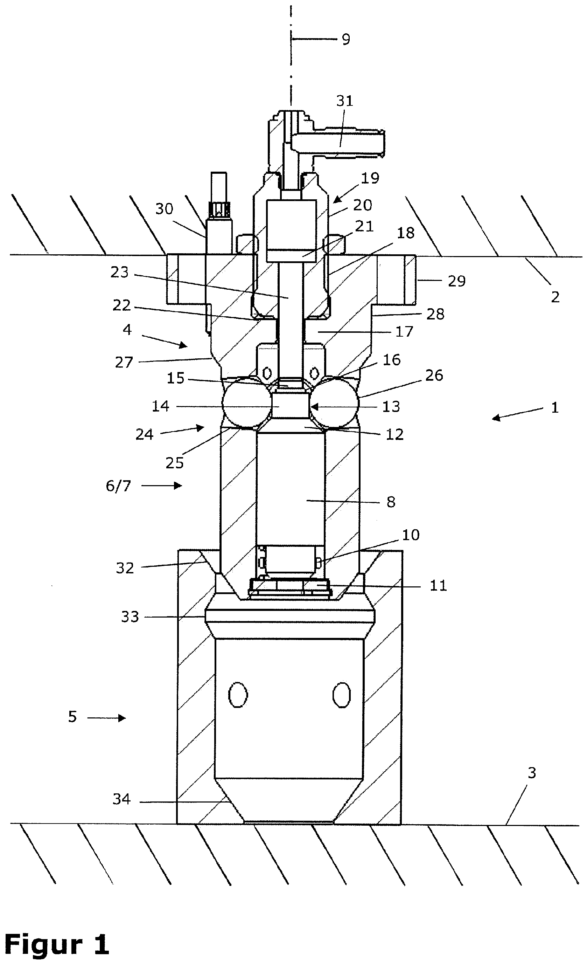

Gemäß Figur 1 ist eine Kupplungsvorrichtung 1 zur Herstellung einer lösbaren Verbindung zwischen einem ersten Bauteil 2 und einem zweiten Bauteil 3 einer maschinellen Anordnung für die Blechbearbeitung vorgesehen. Bei dem ersten Bauteil 2 handelt es sich in dem dargestellten Beispielsfall um einen Tragrahmen einer Sortiervorrichtung zum Sortieren von Bearbeitungsprodukten einer mittels einer Werkzeugmaschine durchgeführten schneidenden Blechbearbeitung. Als zweites Bauteil 3 ist vorliegend eine Handlingeinheit der Sortiervorrichtung an das erste Bauteil anzukuppeln.

Im Einzelnen umfasst die Kupplungsvorrichtung 1 einen Kupplungsvorsprung in Form eines an dem ersten Bauteil 2 befestigten Kupplungszapfens 4 sowie als Kupplungsaufnahme eine mit dem zweiten Bauteil 3 verbundene Kupplungshülse 5.

Der Kupplungszapfen 4 ist als zylindrischer Hohlzapfen mit abgestuftem Außendurchmesser und einem konischen freien Ende ausgeführt. Ein Längenabschnitt 6 des Kupplungszapfens 4 bildet einen Verriegelungszylinder 7 aus, in welchem ein zylindrisches Verriegelungselement 8 nach Art eines Verriegelungskolbens beweglich geführt ist. Eine Bewegungsachse 9 des Verriegelungselements 8 verläuft in Längsrichtung des Kupplungszapfens 4. An seiner zu dem freien Ende des Kupplungszapfens 4 hin liegenden Stirnfläche wird das Verriegelungselement 8 von einer Feder 10 beaufschlagt, die im vorliegenden Beispielsfall als Schraubenfeder ausgebildet ist und die auf einem durchmesserreduzierten axialen Fortsatz des Verriegelungselements 8 aufsitzt. Die Feder 10 ist zwischen der von ihr beaufschlagten Stirnfläche des Verriegelungselements 8 und einem Ring 11 vorgespannt, der in das freie Ende des Kupplungszapfens 4 eingeschraubt ist.

An der von der Feder 10 abliegenden Seite ist das Verriegelungselement 8 mit einem sich zu dem ersten Bauteil hin verjüngendem Konus versehen, der an seinem Umfang eine konische Schaltfläche 12 aufweist. Von dem Konus geht ein zylindrischer Dichtungsansatz 13 aus, der einen axialen Abschnitt 14 mit verhältnismäßig großem Durchmesser und einen sich daran anschließenden axialen Abschnitt 15 mit reduziertem Durchmesser aufweist. Auf den axialen Abschnitt 15 reduzierten Durchmessers ist eine O-Ring-Dichtung 16 aufgeschoben, die auf einer an dem Übergang zwischen dem axialen Abschnitt 14 und dem axialen Abschnitt 15 des zylindrischen Dichtungsansatzes 13 ausgebildeten Stufenfläche aufliegt. Das Verriegelungselement 8 einschließlich seines durchmesserreduzierten Fortsatzes zur Lagerung der Feder 10, der Konus mit der Schaltfläche 12 und der zylindrische Dichtungsansatz 13 sind einstückig aus einem Teil gefertigt.

Der Innenraum des Verriegelungszylinders 7 wird nach oben hin durch einen Innenbund 17 des hohlzylindrischen Kupplungszapfens 4 begrenzt. Der Innenbund 17 fasst eine zylindrische Durchtrittsöffnung ein. An der dem Innenraum des Verriegelungszylinders 7 gegenüberliegenden Seite begrenzt der Innenbund 17 einen Montageraum 18, in den eine Rückstellvorrichtung 19 eingeschraubt ist.

Die Rückstellvorrichtung 19 umfasst einen Rückstellzylinder 20, an dessen Außenwand die Schraubverbindung mit dem hohlzylindrischen Kupplungszapfen 4 hergestellt ist und der in seinem Innern einen Rückstellkolben 21 führt. Zwischen den Innenbund 17 des Kupplungszapfens 4 und die diesem gegenüberliegende Stirnfläche des Rückstellzylinders 20 ist ein Dichtungsring 22 eingelegt. Der Rückstellkolben 21 ist mit einer Kolbenstange 23 versehen, welche die Durchtrittsöffnung an dem Innenbund 17 des Kupplungszapfens 4 mit radialem Spiel durchsetzt und die in dem Funktionszustand der Rückstellvorrichtung 19 gemäß Figur 1 in das Innere des Verriegelungszylinders 7 ragt, wo sie mit ihrer Stirnfläche an der dieser gegenüberliegenden Stirnfläche des zylindrischen Dichtungsansatzes 13 an dem Verriegelungselement 8 abgestützt ist.

Unterhalb des Innenbundes 17 ist die achsparallele Wand des Verriegelungszylinders 7 mit mehreren über den Umfang des Verriegelungszylinders 7 verteilten fensterartigen Öffnungen 24 versehen. Leibungen 25 der fensterartigen Öffnungen 24 verlaufen zu dem Inneren des Verriegelungszylinders 7 hin abschüssig. Jede der fensterartigen Öffnungen 24 nimmt ein als Kupplungskugel 26 ausgebildetes vorsprungseitiges Kupplungselement auf. Oberhalb der mit den Kupplungskugeln 26 versehenen fensterartigen Öffnungen 24 besitzt der Kupplungszapfen 4 an seiner Außenseite eine konische Übergangsfläche 27, welche den Übergang zwischen dem Längenabschnitt 6 und einem gegenüber diesem durchmessererweiterten Längenabschnitt 28 des Kupplungszapfens 4 bildet. An der zu dem ersten Bauteil 2 hin liegenden Seite folgt auf den Längenabschnitt 28 ein Flansch 29 des Kupplungszapfens 4, an welchem der Kupplungszapfen 4 mit dem ersten Bauteil 2 verschraubt ist und der außerdem einen Näherungsschalter 30 lagert.

Dem Näherungsschalter 30 benachbart ist ein Druckmittelanschluss, in dem dargestellten Beispielsfall ein Druckluftanschluss 31 der Rückstellvorrichtung 19. Die an dem zweiten Bauteil 3 montierte Kupplungshülse 5 ist an ihrem freien Ende mit einer konischen Einlaufschräge 32 versehen. In Figur 1 unterhalb der konischen Einlaufschräge 32 ist in die Innenwand der Kupplungshülse 5 eine als aufnahmeseitiges Kupplungselement dienende Kupplungsnut 33 eingesenkt. Eine konische Stützfläche 34 an der Innenwand der Kupplungshülse 5 ist dem zweiten Bauteil 3 unmittelbar benachbart.

In dem in Figur 1 dargestellten Ausgangszustand der Kupplungsvorrichtung 1 sind der Kupplungszapfen 4 und die Kupplungshülse 5 und somit auch das erste Bauteil 2 und das zweite Bauteil 3 voneinander entkuppelt. An den Innenraum des Rückstellzylinders 20 der Rückstellvorrichtung 19 ist über den Druckluftanschluss 31 der Rückstellvorrichtung 19 ein Überdruck angelegt, aufgrund dessen der Rückstellkolben 21 und die Kolbenstange 23 der Rückstellvorrichtung 19 gegen die Wirkung der das Verriegelungselement 8 beaufschlagenden Feder 10 in ihre untere Endstellung bewegt sind. Aufgrund dieser Stellung des Rückstellkolbens 21 und der Kolbenstange 23 ist der zylindrische Dichtungsansatz 13 an dem Verriegelungselement 8 mit der auf dem axialen Abschnitt 15 des zylindrischen Dichtungsansatzes 13 aufsitzenden O-Ring-Dichtung 16 von dem Rand der Durchtrittsöffnung an dem Innenbund 17 beabstandet. Die Kupplungskugeln 26 sind unter Schwerkraftwirkung in Richtung auf den Innenraum des Verriegelungszylinders 7 gerollt und stützen sich dort an dem axialen Abschnitt 14 des an dem Verriegelungselement 8 vorgesehenen zylindrischen Dichtungsansatzes 13 in dessen radialer Richtung ab. Die Schaltfläche 12 an dem Verriegelungselement 8 ist den Kupplungskugeln 26 mit geringem Abstand benachbart.

Um das erste Bauteil 2 und das zweite Bauteil 3 miteinander zu kuppeln, wird der Kupplungszapfen 4 an dem ersten Bauteil 2 in axialer Richtung in die Kupplungshülse 5 an dem zweiten Bauteil 3 eingeschoben. Die Einschubbewegung endet, sobald der Kupplungszapfen 4 mit seinem in Bewegungsrichtung vorauseilenden konischen Ende auf der konischen Stützfläche 34 an der Innenwand der Kupplungshülse 5 aufsetzt. Zeitgleich damit kommt die konische Übergangsfläche 27 an dem Kupplungszapfen 4 in Kontakt mit der konischen Einlaufschräge 32 an dem freien Ende der Kupplungshülse 5. Infolge des Zusammenwirkens der genannten Flächen ist der Kupplungszapfen 4 im Innern der Kupplungshülse 5 zentriert. Die Kupplungskugeln 26, die an dem Kupplungszapfen 4 nach wie vor die Stellung gemäß Figur 1 einnehmen, liegen auf Höhe der Kupplungsnut 33 an der Innenwand der Kupplungshülse 5.

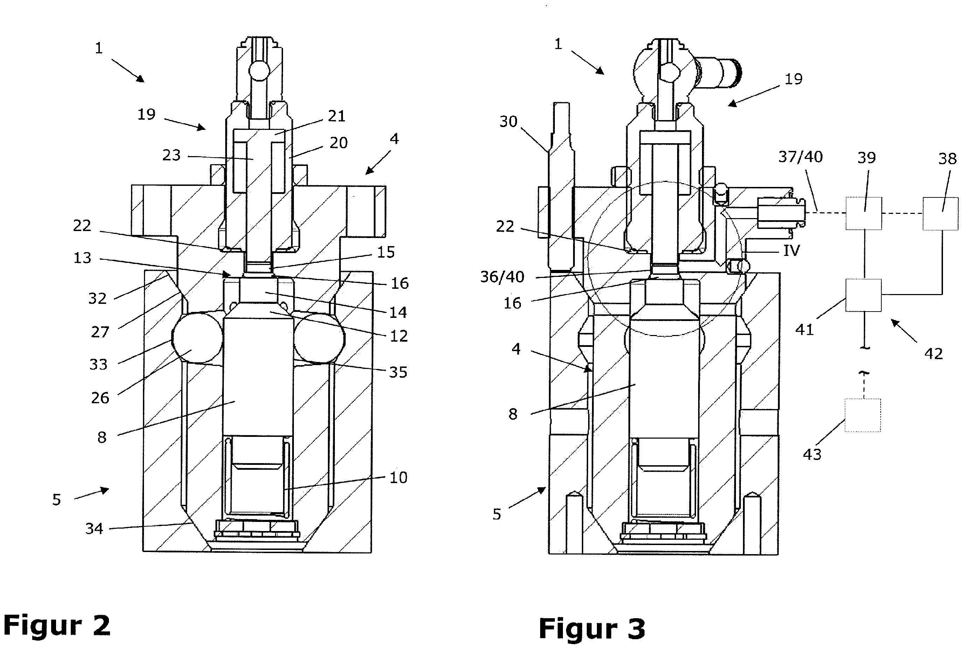

Ausgehend von diesen in den Figuren nicht dargestellten Verhältnissen wird der Innenraum des Rückstellzylinders 20 der Rückstellvorrichtung 19 drucklos geschaltet. Infolgedessen bewegt sich das Verriegelungselement 8 unter der Wirkung der sich entspannenden Feder 10 längs der Bewegungsachse 9 in Richtung auf das obere Ende des Verriegelungszylinders 7. Die an dem Verriegelungselement 8 angebrachte Schaltfläche 12 wirkt dabei mit den Kupplungskugeln 26 nach Art einer Getriebefläche eines Keilgetriebes zusammen und drängt die Kupplungskugeln 26 aus der Position gemäß Figur 1 in radialer Richtung nach außen. Dadurch schaltet das Verriegelungselement 8 die Kupplungskugeln 26 und mit diesen die gesamte Kupplungsvorrichtung 1 in den Kupplungszustand. Im Kupplungszustand liegen die Kupplungskugeln 26 jeweils teilweise im Innern der fensterartigen Öffnungen 24 an dem Kupplungszapfen 4 und im Innern der Kupplungsnut 33 an der Kupplungshülse 5. Dabei werden die Kupplungskugeln 26 durch die Schaltfläche 12 radial so weit nach außen gedrängt, dass im Anschluss an die Schaltfläche 12 das diesem nacheilende zylindrische Verriegelungselement 8 die Kupplungskugeln 26 mit einem Teil seiner achsparallelen Außenwand passieren kann. Es ergeben sich damit die Verhältnisse gemäß Figur 2. In Figur 2 und auch in Figur 3 sind die miteinander zu verbindenden Bauteile 2, 3 der Einfachheit halber nicht dargestellt.

Das Verriegelungselement 8 befindet sich in der Verriegelungsposition, in welcher es an seiner eine Verriegelungsfläche 35 bildenden und in Bewegungsrichtung des Verriegelungselements 8 verlaufenden achsparallelen Außenfläche die Kupplungskugeln 26 gegen eine Rückstellbewegung in die Position gemäß Figur 1 blockiert. Wirkt auf die im Kupplungszustand befindliche Kupplungsvorrichtung 1 eine Kraft, die bestrebt ist, den Kupplungszapfen 4 und die Kupplungshülse 5 in axialer Richtung auseinander zu ziehen, so werden die Kupplungskugeln 26 durch die schräg verlaufende Wand der Kupplungsnut 33 an der Kupplungshülse 5 einwärts gegen die Verriegelungsfläche 35 an dem Verriegelungselement 8 gepresst. Die Wirkungslinie der daraus resultierenden Abstützkraft verläuft senkrecht zu der Verriegelungsfläche 35 und ist folglich nicht in der Lage, das Verriegelungselement 8 relativ zu den Kupplungskugeln 26 aus der Position gemäß Figur 2 in Richtung auf die Position gemäß Figur 1 zurückzustellen. Das Verriegelungselement 8 sichert daher dauerhaft und funktionssicher die Kupplungskugeln 26 in dem Kupplungszustand und mithin die Kupplungsvorrichtung 1 in ihrem Funktionszustand.

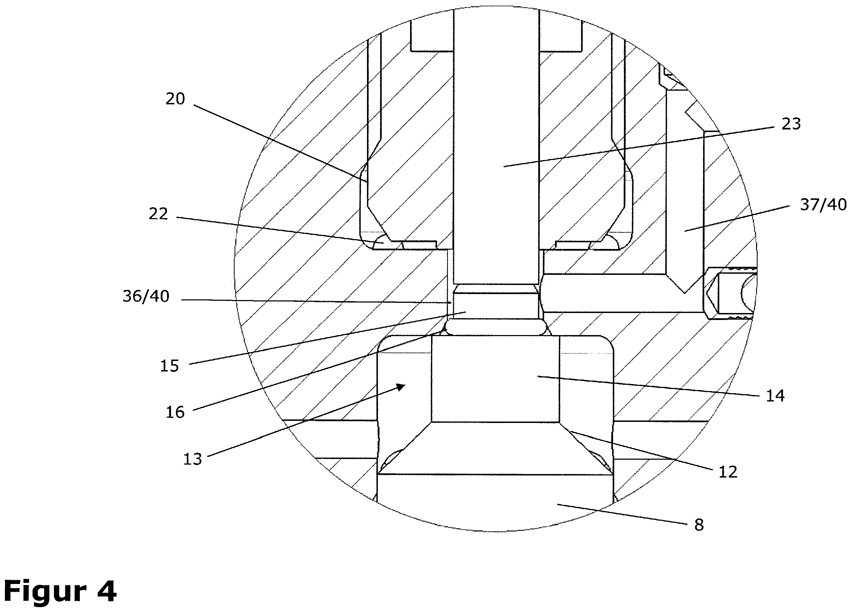

Mit der Bewegung des Verriegelungselements 8 aus der in Figur 1 dargestellten Position an dem Kupplungszapfen 4 in die Position gemäß Figur 2 ist der zylindrische Dichtungsansatz 13 mit dem durchmesserreduzierten axialen Abschnitt 15 in die Durchtrittsöffnung an dem Innenbund 17 des Kupplungszapfens 4 eingelaufen. Die Stufenfläche an dem Übergang zwischen den axialen Abschnitten 14, 15 des zylindrischen Dichtungsansatzes 13 wird unter der Wirkung der das Verriegelungselement 8 beaufschlagenden Feder 10 gegen den Rand der Durchtrittsöffnung an dem Innenbund 17 des Kupplungszapfens 4 gepresst. Zwischen der genannten Stufenfläche und dem Innenbund 17 befindet sich die O-Ring-Dichtung 16, die aufgrund des ausgeübten Drucks ihre Dichtwirkung entfalten kann. An der gegenüberliegenden Seite des Innenbundes 17 presst der Rückstellkolben 21 der Rückstellvorrichtung 19 den Dichtungsring 22 gegen den Innenbund 17 des Kupplungszapfens 4. Der Dichtungsring 22 entfaltet daher ebenfalls eine abdichtende Wirkung. Gemeinschaftlich dichten die O-Ring-Dichtung 16 an der Unterseite des Innenbunds 17 und der Dichtungsring 22 an der Oberseite des Innenbunds 17 einen Ringraum ab, der sich aufgrund des radialen Spiels zwischen der Kolbenstange 23 des Rückstellkolbens 21 und dem Innenbund 17 zwischen der Außenwand der Kolbenstange 23 und der Wand der Durchtrittsöffnung an dem Innenbund 17 ergibt. In Figur 4 ist der Ringraum zu erkennen und mit dem Bezugszeichen 36 versehen. Der Ringraum 36 wird als Messkammer genutzt.

Ausweislich Figur 4 mündet in den Ringraum 36 eine Druckleitung 37. Über die Druckleitung 37 ist der Ringraum 36 an einen Unterdruckerzeuger 38 angeschlossen (Figur 3). Zwischen dem Ringraum 36 und dem Unterdruckerzeuger 38 ist in der Druckleitung 37 ein Druckmesser 39 vorgesehen. Der Druckmesser 39 ist über eine elektronische Auswertevorrichtung 41 mit dem Unterdruckerzeuger 38 und darüber hinaus mit weiteren Funktionseinheiten der mit dem ersten Bauteil 2 und dem dritten Bauteil 3 versehenen maschinellen Anordnung verbunden. Der Druckmesser 39 misst den Innendruck in einem Messraum 40, der von dem Ringraum 36 und der Druckleitung 37 gebildet wird. Ebenso wie der Messraum 40, der Unterdruckerzeuger 38 und der Druckmesser 39 ist die Auswertevorrichtung 41 Teil einer Positionserfassungsvorrichtung 42 für das Verriegelungselement 8. Als an die Auswertevorrichtung 41 der Positionserfassungseinrichtung 42 anzuschließende Funktionseinheit der genannten Art kommt beispielsweise eine in Figur 3 gestrichelt angedeutete Anzeigevorrichtung 43 in Frage.

In der ersten Phase des Kupplungsvorgangs wird der Kupplungszapfen 4 in der vorstehend beschriebenen Weise in die Kupplungshülse 5 eingeführt, bis der Kupplungszapfen 4 im Innern der Kupplungshülse 5 zentriert und spielfrei abgestützt ist. Mit Erreichen dieses Funktionszustandes der Kupplungsvorrichtung 1 spricht der Näherungsschalter 30 an dem Kupplungszapfen 4 an. Der Näherungsschalter 30 setzt zum einen die Druckquelle still, die den Innenraum des Rückstellzylinders 20 der Rückstellvorrichtung 19 zu Beginn des Kupplungsvorgangs mit einem Druckmedium beaufschlagt und dadurch das Verriegelungselement 8 in der Position gemäß Figur 1 gehalten hat. Mit dem Stillsetzen der Druckquelle wird das Innere des Rückstellzylinders 20 drucklos geschaltet und das Verriegelungselement 8 kann sich unter der Wirkung der Feder 10 aus seiner Ausgangsposition in Richtung auf die Verriegelungsposition bewegen. Gleichzeitig mit dem Stillsetzen der Druckquelle der Rückstellvorrichtung 19 bewirkt der Näherungsschalter 30 die Inbetriebnahme des Unterdruckerzeugers 38.

Bei laufendem Unterdruckerzeuger 38 bewegt sich das Verriegelungselement 8 aus der Ausgangsposition gemäß Figur 1 in die Verriegelungsposition gemäß den Figuren 2 bis 4. Während dessen wird der Druck in den von dem Ringraum 36 und der Druckleitung 37 gebildeten Messraum 40 von dem Druckmesser 39 fortlaufend gemessen und in der Auswertevorrichtung 41 mit einem der Verriegelungsposition des Verriegelungselements 8 zugeordneten Sollwert verglichen.

Erreicht das Verriegelungselement 8 seine Verriegelungsposition, so wird der Messraum 40 an dem Ringraum 36 durch die mit dem Verriegelungselement 8 bewegungsmäßig verbundenen O-Ring-Dichtung 16 abgedichtet. Mit der Abdichtung des Ringraums 36 ist eine Abdichtung des gesamten Messraums 40 verbunden. Folglich legt der weiterhin betriebene Unterdruckerzeuger 38 an den Messraum 40 einen Unterdruck an. Unterschreitet der mittels des Druckmessers 39 gemessene Unterdruck einen als Sollwert vorgegebenen Schwellwert, so erzeugt die Auswertevorrichtung 41, in welcher der Istwert des Drucks in dem Messraum 40 fortlaufend mit dem Schwellwert verglichen wird, ein Steuersignal für die Anzeigevorrichtung 43. Aufgrund des Steuersignals wird an der Anzeigevorrichtung 43 eine Anzeige generiert, welche den Bediener der maschinellen Anordnung darüber informiert, dass die Kupplungsvorrichtung 1 den mit der Verriegelungsposition des Verriegelungselements 8 verbundenen Funktionszustand erreicht hat und dass dementsprechend eine belastbare Verbindung zwischen den beiden Bauteilen 2, 3 hergestellt ist.

Denkbar ist auch die Erzeugung eines Steuersignals für einen Antrieb der Tragstruktur, welche vorliegend das erste Bauteil 2 bildet. Aufgrund des Steuersignals, das mit Erreichen des durch das Verriegelungselement 8 gesicherten Kupplungszustandes der Kupplungsvorrichtung 1 erzeugt wird, kann der Antrieb der Tragstruktur freigeschaltet und dadurch die Tragstruktur und die damit als zweites Bauteil 3 gekuppelte Handlingeinheit für die im Rahmen des Einsatzes der betreffenden Sortiervorrichtung auszuführenden Bewegungen freigegeben werden.

Der Unterdruckerzeuger 38 bleibt so lange im Betrieb wie die Kupplung der Bauteile 2, 3 aufrechterhalten wird.

Zum Überführen der Kupplungsvorrichtung 1 in den Außerfunktionszustand wird der Unterdruckerzeuger 38 stillgesetzt und der Messraum 40 wird drucklos geschaltet. Außerdem wird der Druckerzeuger der Rückstellvorrichtung 19 betätigt und auf dieser Art und Weise an das Innere des Rückstellzylinders 20 ein Druck angelegt, aufgrund dessen sich das Verriegelungselement 8 im Innern des Verriegelungszylinders 7 aus der Verriegelungsposition gemäß den Figuren 2 bis 4 zurück in die Ausgangsposition gemäß Figur 1 bewegt. Sobald das Verriegelungselement 8 bei seiner Rückstellbewegung die Kupplungskugeln 26 passiert hat, rollen diese in den fensterartigen Öffnungen 24 des Kupplungszapfens 4 radial einwärts in die Stellung gemäß Figur 1. Dadurch ist die zuvor über die Kupplungskugeln 26 an dem Kupplungszapfen 4 und die Kupplungsnut 33 an der Kupplungshülse 5 hergestellte Formschlussverbindung zwischen dem Kupplungszapfen 4 und der Kupplungshülse 5 wieder gelöst.

## Patentansprüche

1. Kupplungsvorrichtung zum Verbinden von einem ersten Bauteil (2) mit einem zweiten Bauteil (3) einer maschinellen Anordnung für die Werkstückbearbeitung, insbesondere für die Blechbearbeitung,
• mit einer dem einen der beiden Bauteile (2, 3) zugeordneten Kupplungsaufnahme (5) und einem dem anderen der beiden Bauteile (2, 3) zugeordneten Kupplungsvorsprung, der in die Kupplungsaufnahme (5) eingreift,
• mit Kupplungselementen (26, 33) in Form eines aufnahmeseitigen Kupplungselements (33) an der Kupplungsaufnahme (5) und eines vorsprungseitigen Kupplungselements (26) an dem in die Kupplungsaufnahme (5) eingreifenden Kupplungsvorsprung, wobei die Kupplungselemente (26, 33) mittels einer Schaltvorrichtung in einen Kupplungszustand schaltbar sind, in welchem die beiden Bauteile (2, 3) über die Kupplungselemente (26, 33) aneinander festgelegt sind sowie
• mit einer Verriegelungsvorrichtung, die in einen Verriegelungszustand schaltbar ist, in welchem die Verriegelungsvorrichtung die in den Kupplungszustand geschalteten Kupplungselemente (26, 33) gegen Verlassen des Kupplungszustands sichert und die als Verriegelungselement einen Verriegelungskolben (8) aufweist, der in einem Verriegelungszylinder (7) in eine dem Verriegelungszustand der Verriegelungsvorrichtung zugeordnete Verriegelungsposition bewegbar geführt ist,
• wobei für den Verriegelungskolben (8) der Verriegelungsvorrichtung eine Positionserfassungsvorrichtung (42) vorgesehen ist, mittels derer feststellbar ist, ob der Verriegelungskolben (8) in die Verriegelungsposition bewegt ist oder nicht,
• wobei die Positionserfassungsvorrichtung (42) einen Messraum (40) und einen Druckmesser (39) aufweist,
• wobei der Messraum (40) mittels des in die Verriegelungsposition bewegten Verriegelungskolbens (8) abgedichtet ist und der Innendruck des Messraums (40) bei in die Verriegelungsposition bewegtem Verriegelungskolben (8) einen Sollwert aufweist,
• wobei mittels des Druckmessers (39) der Innendruck des Messraums (40) messbar ist und
• wobei als Kupplungsvorsprung ein als Hohlzapfen ausgebildeter Kupplungszapfen (4) vorgesehen ist und ein Längenabschnitt (6) des Kupplungszapfens (4) den Verriegelungszylinder (7) zur Führung des Verriegelungskolbens (8) bildet, wobei eine Bewegungsachse (9) des Verriegelungskolbens (8) in Längsrichtung des Kupplungszapfens (4) verläuft,
**dadurch gekennzeichnet,**
**dass** der Kupplungszapfen (4) als zylindrischer Hohlzapfen ausgebildet ist und ein Innenraum des Verriegelungszylinders (7) an einer Seite, welche zu dem dem Kupplungszapfen (4) zugeordneten Bauteil (2) hin zeigt, durch einen Innenbund (17) des Kupplungszapfens (4) begrenzt ist,
**dass** der Innenbund (17) des Kupplungszapfens (4) eine zylindrische Durchtrittsöffnung einfasst und an der dem Innenraum des Verriegelungszylinders (7) gegenüberliegenden Seite einen Montageraum (18) begrenzt, in den eine Rückstellvorrichtung (19) eingeschraubt ist mit einem Rückstellzylinder (20), an dessen Außenwand eine Schraubverbindung mit dem Kupplungszapfen (4) hergestellt ist sowie mit einem im Innern des Rückstellzylinders (20) geführten Rückstellkolben (21), wobei zwischen den Innenbund (17) des Kupplungszapfens (4) und eine diesem gegenüberliegende Stirnfläche des Rückstellzylinders (20) ein Dichtungsring (22) eingelegt ist
**dass** der Rückstellkolben (21) der Rückstellvorrichtung (19) mit einer Kolbenstange (23) versehen ist, welche die Durchtrittsöffnung an dem Innenbund (17) des Kupplungszapfens (4) mit radialem Spiel durchsetzt,
**dass** der in dem Innenraum des Verriegelungszylinders (7) geführte Verriegelungskolben (8) an einer zu dem freien Ende des Kupplungszapfens (4) hin liegenden Stirnfläche von einer Feder (10) beaufschlagt ist und an der Seite, welche zu dem dem Kupplungsvorsprung (4) zugeordneten ersten Bauteil (2) hin zeigt, mit einem sich zu dem ersten Bauteil (2) hin verjüngenden Konus versehen ist, von welchem ein zylindrischer Dichtungsansatz (13) ausgeht, der seinerseits einen axialen Abschnitt (14) mit verhältnismäßig großem Durchmesser und einen sich daran anschließenden axialen Abschnitt (15) mit reduziertem Durchmesser aufweist, wobei auf den axialen Abschnitt (15) mit reduziertem Durchmesser eine O-Ring-Dichtung (16) aufgeschoben ist, die auf einer Stufenfläche aufliegt, die an dem Übergang zwischen dem axialen Abschnitt (14) mit verhältnismäßig großem Durchmesser und dem axialen Abschnitt (15) mit reduziertem Durchmesser ausgebildet ist,
**dass** bei Verriegelungsposition des Verriegelungskolbens (8)
• der zylindrische Dichtungsansatz (13) des Verriegelungskolbens (8) mit dem durchmesserreduzierten axialen Abschnitt (15) in die Durchtrittsöffnung an dem Innenbund (17) des Kupplungszapfens (4) eingelaufen ist,
• die Stufenfläche an dem Übergang zwischen dem axialen Abschnitt (14) mit verhältnismäßig großem Durchmesser und dem axialen Abschnitt (15) mit reduziertem Durchmesser des zylindrischen Dichtungsansatzes (13) unter der Wirkung der den Verriegelungskolben (8) beaufschlagenden Feder (10) gegen den Rand der Durchtrittsöffnung an dem Innenbund (17) des Kupplungszapfens (4) gepresst ist und die zwischen der Stufenfläche und dem Innenbund (17) angeordnete O-Ring-Dichtung (16) aufgrund des ausgeübten Drucks ihre Dichtwirkung entfaltet,
• an der der O-Ring-Dichtung (16) gegenüberliegenden Seite des Innenbundes (17) des Kupplungszapfens (4) der Rückstellkolben (21) der Rückstellvorrichtung (19) den Dichtungsring (22) gegen den Innenbund (17) presst derart, dass der Dichtungsring (22) ebenfalls eine abdichtende Wirkung entfaltet und
• die O-Ring-Dichtung (16) an der einen Seite und der Dichtungsring (22) an der anderen Seite des Innenbundes (17) des Kupplungszapfens (4) einen Ringraum (36) abdichten, der sich aufgrund des radialen Spiels zwischen der Kolbenstange (23) des Rückstellkolbens (21) und dem Innenbund (17) zwischen der Außenwand der Kolbenstange (23) und der Wand der Durchtrittsöffnung an dem Innenbund (17) ergibt,
**dass** in den Ringraum (36) zwischen der Außenwand der Kolbenstange (23) des Rückstellkolbens (21) und der Wand der Durchtrittsöffnung an dem Innenbund (17) des Kupplungszapfens (4) eine Druckleitung (37) mündet, über welche der Ringraum (36) an einen Unterdruckerzeuger (38) angeschlossen ist, wobei in der Druckleitung (37) zwischen dem Unterdruckerzeuger (38) und dem Ringraum (36) der Druckmesser (39) der Positionserfassungsvorrichtung (42) vorgesehen ist,
**dass** der Ringraum (36) zwischen der Außenwand der Kolbenstange (23) des Rückstellkolbens (21) und der Wand der Durchtrittsöffnung an dem Innenbund (17) des Kupplungszapfens (4) gemeinsam mit der Druckleitung (37) den Messraum (40) der Positionserfassungsvorrichtung (42) bildet und
**dass** mittels des Unterdruckerzeugers (38) bei in die Verriegelungsposition bewegtem Verriegelungskolben (8) in dem Messraum (40) der Innendruck mit dem Sollwert als Unterdruck erzeugbar ist und der Druckmesser (39) den als Unterdruck ausgebildeten Innendruck des Messraums (40) in der Druckleitung (37) misst.

2. Kupplungsvorrichtung nach Anspruch 1, **dadurch gekennzeichnet, dass** die Positionserfassungsvorrichtung (42) für den Verriegelungskolben (8) der Verriegelungsvorrichtung eine Auswertevorrichtung (41) umfasst, mittels derer mit einem Positionsvergleich eine durch die Positionserfassungsvorrichtung (42) erfasste tatsächliche Position des Verriegelungskolbens (8) mit der Verriegelungsposition vergleichbar ist und mittels derer in Abhängigkeit von dem Ergebnis des Positionsvergleichs ein Steuersignal für eine Funktionseinheit (43) der mit der Kupplungsvorrichtung versehenen maschinellen Anordnung erzeugbar ist.

3. Kupplungsvorrichtung nach einem der vorhergehenden Ansprüche, **dadurch gekennzeichnet, dass** mittels der Schaltvorrichtung der Kupplungselemente (26, 33) wenigstens eines der Kupplungselemente (26, 33) in eine Kupplungsposition bewegbar ist und dadurch die Kupplungselemente (26, 33) in den Kupplungszustand schaltbar sind und dass der Verriegelungskolben (8) der Verriegelungsvorrichtung ein Schaltelement der Schaltvorrichtung der Kupplungselemente (26, 33) bildet, indem aufgrund der in einer Bewegungsrichtung ausgeführten Bewegung des Verriegelungskolbens (8) in die Verriegelungsposition das betreffende Kupplungselement (26, 33) in die Kupplungsposition bewegbar ist.

4. Kupplungsvorrichtung nach Anspruch 3, **dadurch gekennzeichnet, dass** der Verriegelungskolben (8) der Verriegelungsvorrichtung mit dem betreffenden Kupplungselement (26, 33) über ein Keilgetriebe mit wenigstens einer gegen die Bewegungsrichtung des Verriegelungskolbens (8) geneigten Keilfläche antriebsverbunden ist und dass mittels des Keilgetriebes eine Bewegung des Verriegelungskolbens (8) in die Verriegelungsposition in eine quer zu der Bewegungsrichtung des Verriegelungskolbens (8) gerichtete Bewegung des betreffenden Kupplungselements (26, 33) in die Kupplungsposition umsetzbar ist.

5. Kupplungsvorrichtung nach Anspruch 4, **dadurch gekennzeichnet, dass** an dem Verriegelungskolben (8) eine sich in Bewegungsrichtung des Verriegelungskolbens (8) erstreckende Verriegelungsfläche (35) und als Keilgetriebeelement eine Getriebefläche (12) des Keilgetriebes, vorzugsweise eine Getriebefläche (12) in Form einer gegen die Bewegungsrichtung des Verriegelungskolbens (8) geneigten Keilfläche, vorgesehen sind, wobei die Getriebefläche (12) des Keilgetriebes und die Verriegelungsfläche (35) an dem Verriegelungskolben (8) derart angeordnet sind, dass bei der Bewegung des Verriegelungskolbens (8) in die Verriegelungsposition die Getriebefläche (12) des Keilgetriebes der Verriegelungsfläche (35) vorauseilt und dass das betreffende Kupplungselement (26, 33) in der Kupplungsposition an der Verriegelungsfläche (35) des Verriegelungskolbens (8) mit einer Abstützkraft abgestützt ist, deren Wirkungslinie im Wesentlichen senkrecht zu der Verriegelungsfläche (35) verläuft.

6. Kupplungsanordnung umfassend eine Mehrzahl von Kupplungsvorrichtungen (1), **dadurch gekennzeichnet, dass** die Kupplungsvorrichtungen (1) nach einem der vorhergehenden Ansprüche ausgebildet sind.

7. Kupplungsanordnung nach Anspruch 6, **dadurch gekennzeichnet, dass** die Positionserfassungsvorrichtungen (42) für die Verriegelungskolben (8) der Verriegelungsvorrichtungen (1) einen gemeinsamen Messraum (40) und einen gemeinsamen Druckmesser (39) aufweisen, wobei der gemeinsame Messraum (40) mittels der in die Verriegelungsposition bewegten Verriegelungskolben (8) abgedichtet ist und der Innendruck des gemeinsamen Messraums (40) bei in die Verriegelungsposition bewegten Verriegelungskolben (8) einen Sollwert aufweist und dass mittels des gemeinsamen Druckmessers (39) der Innendruck des gemeinsamen Messraums (40) messbar ist.

## Claims

1. Coupling device for connecting a first component (2) to a second component (3) of a machine arrangement for workpiece machining, in particular for sheet-metal machining,
• comprising a coupling receptacle (5) associated with one of the two components (2, 3), and a coupling projection which is associated with the other of the two components (2, 3) and engages in the coupling receptacle (5),
• comprising coupling elements (26, 33) in the form of a receptacle-side coupling element (33) on the coupling receptacle (5) and a projection-side coupling element (26) on the coupling projection that engages in the coupling receptacle (5), the coupling elements (26, 33) being switchable by means of a switching device into a coupling state in which the two components (2, 3) are secured to one another by means of the coupling elements (26, 33), and
• comprising a locking device which can be switched into a locking state in which the locking device ensures that the coupling elements (26, 33) switched into the coupling state do not leave the coupling state, and which comprises, as a locking element, a locking piston (8) which is movably guided in a locking cylinder (7) into a locking position associated with the locking state of the locking device,
• a position-detection device (42) being provided for the locking piston (8) of the locking device, by means of which position-detection device it can be established whether or not the locking piston (8) is moved into the locking position,
• the position-detection device (42) comprising a measurement chamber (40) and a pressure gauge (39),
• the measurement chamber (40) being sealed off by means of the locking piston (8) moved into the locking position, and the internal pressure of the measurement chamber (40) having a target value when the locking piston (8) is moved into the locking position,
• the internal pressure of the measurement chamber (40) being measurable by means of the pressure gauge (39) and
• a coupling pin (4) designed as hollow pin being provided as a coupling projection, and a longitudinal portion (6) of the coupling pin (4) forming the locking cylinder (7) for guiding the locking piston (8), a movement axis (9) of the locking piston (8) extending in the longitudinal direction of the coupling pin (4),
**characterized in that**
the coupling pin (4) is designed as a cylindrical hollow pin, and an inner space of the locking cylinder (7) is delimited on a side which faces the component (2) associated with the coupling pin (4) by an inner collar (17) of the coupling pin (4),
**in that** the inner collar (17) of the coupling pin (4) encloses a cylindrical through-opening and delimits a mounting space (18) on the side opposite the inner space of the locking cylinder (7), into which mounting space a restoring device (19) is screwed which comprises a restoring cylinder (20), on the outer wall of which a screw connection with the coupling pin (4) is produced, and comprising a restoring piston (21) guided inside the restoring cylinder (20), a sealing ring (22) being inserted between the inner collar (17) of the coupling pin (4) and an end face, opposite thereto, of the restoring cylinder (20),
**in that** the restoring piston (21) of the restoring device (19) is provided with a piston rod (23) which passes through the through-opening in the inner collar (17) of the coupling pin (4) with radial clearance,
**in that** the locking piston (8) guided in the inner space of the locking cylinder (7) is acted on by a spring (10) at an end face located towards the free end of the coupling pin (4), and is provided, on the side facing the first component (2) associated with the coupling projection (4), with a cone which tapers towards the first component (2) and from which a cylindrical sealing attachment (13) extends which in turn comprises an axial portion (14) having a relatively large diameter and an axial portion (15) adjoined thereto which has a reduced diameter, an O-ring seal (16) being pushed onto the axial portion (15) having a reduced diameter, which seal rests on a step surface formed at the transition between the axial portion (14) having a relatively large diameter and the axial portion (15) having a reduced diameter,
**in that**, in the locking position of the locking piston (8),
• the cylindrical sealing attachment (13) of the locking piston (8) is inserted, with the axial portion (15) having a reduced diameter, into the through-opening in the inner collar (17) of the coupling pin (4),
• the step surface at the transition between the axial portion (14) having a relatively large diameter and the axial portion (15) having a reduced diameter of the cylindrical sealing attachment (13) is pressed against the edge of the through-opening in the inner collar (17) of the coupling pin (4) under the effect of the spring (10) acting on the locking piston (8), and the O-ring seal (16) arranged between the step surface and the inner collar (17) deploys its sealing effect on account of the exerted pressure,
• on the side of the inner collar (17) of the coupling pin (4) opposite the O-ring seal (16), the restoring piston (21) of the restoring device (19) presses the sealing ring (22) against the inner collar (17) in such a way that the sealing ring (22) also deploys a sealing effect, and
• the O-ring seal (16) on one side and the sealing ring (22) on the other side of the inner collar (17) of the coupling pin (4) seals off an annular space (36) which is formed between the outer wall of the piston rod (23) and the wall of the through-opening in the inner collar (17) on account of the radial clearance between the piston rod (23) of the restoring piston (21) and the inner collar (17),
**in that** a pressure line (37) leads into the annular space (36) between the outer wall of the piston rod (23) of the restoring piston (21) and the wall of the through-opening in the inner collar (17) of the coupling pin (4), by means of which line the annular space (36) is connected to a vacuum generator (38), the pressure gauge (39) of the position-detection device (42) being provided in the pressure line (37) between the vacuum generator (38) and the annular space (36),
**in that** the annular space (36) between the outer wall of the piston rod (23) of the restoring piston (21) and the wall of the through-opening in the inner collar (17) of the coupling pin (4) forms, together with the pressure line (37), the measurement chamber (40) of the position-detection device (42), and
**in that**, when the locking piston (8) is moved into the locking position, in the measurement chamber (40), the internal pressure having the target value can be generated as a vacuum by means of the vacuum generator (38), and the pressure gauge (39) measures the internal pressure, formed as a vacuum, of the measurement chamber (40) in the pressure line (37).

2. Coupling device according to claim 1, **characterized in that** the position-detection device (42) for the locking piston (8) of the locking device comprises an analysis device (41), by means of which, by way of a position comparison, an actual position of the locking piston (8) detected by the position-detection device (42) can be compared with the locking position, and by means of which a control signal for a functional unit (43) of the machine arrangement provided with the coupling device can be generated on the basis of the result of the position comparison.

3. Coupling device according to either of the preceding claims, **characterized in that**, by means of the switching device of the coupling elements (26, 33), at least one of the coupling elements (26, 33) can be moved into a coupling position, and thus the coupling elements (26, 33) can be switched into the coupling state, and **in that** the locking piston (8) of the locking device forms a switching element of the switching device of the coupling elements (26, 33) by the relevant coupling element (26, 33) being movable into the coupling position on account of the movement in a movement direction of the locking piston (8) into the locking position.

4. Coupling device according to claim 3, **characterized in that** the locking piston (8) of the locking device is drivingly connected to the relevant coupling element (26, 33) by means of a wedge gear having at least one wedge surface that is inclined relative to the movement direction of the locking piston (8), and **in that**, by means of the wedge gear, a movement of the locking piston (8) into the locking position can be converted into a movement, transverse to the movement direction of the locking piston (8), of the relevant coupling element (26, 33) into the coupling position.

5. Coupling device according to claim 4, **characterized in that** a locking surface (35) extending in the movement direction of the locking piston (8) and, as a wedge gear element, a gear surface (12) of the wedge gear, preferably a gear surface (12) in the form of a wedge surface that is inclined relative to the movement direction of the locking piston (8), are provided on the locking piston (8), the gear surface (12) of the wedge gear and the locking surface (35) being arranged on the locking piston (8) in such a way that, when the locking piston (8) is moved into the locking position, the gear surface (12) of the wedge gear is leading the locking surface (35), and **in that** the relevant coupling element (26, 33) is supported in the coupling position on the locking surface (35) of the locking piston (8) with a supporting force of which the line of action extends substantially perpendicularly to the locking surface (35).

6. Coupling arrangement comprising a plurality of coupling devices (1), **characterized in that** the coupling devices (1) are designed according to any of the preceding claims.

7. Coupling arrangement according to claim 6, **characterized in that** the position-detection devices (42) for the locking pistons (8) of the locking devices (1) comprise a common measurement chamber (40) and a common pressure gauge (39), the common measurement chamber (40) being sealed off by means of the locking pistons (8) moved into the locking position, and the internal pressure of the common measurement chamber (40) having a target value when the locking pistons (8) are moved into the locking position, and **in that** the internal pressure of the common measurement chamber (40) can be measured by means of the common pressure gauge (39).

## Revendications

1. Dispositif d'accouplement pour relier un premier composant (2) à un second composant (3) d'un dispositif mécanique d'usinage de pièces, en particulier de tôles,
• comportant un réceptacle d'accouplement (5) affecté à l'un des deux composants (2, 3) et une saillie d'accouplement affectée à l'autre des deux composants (2, 3), laquelle saillie s'engage dans le réceptacle d'accouplement (5),
• comportant des éléments d'accouplement (26, 33) sous la forme d'un élément d'accouplement côté récepteur (33) sur le réceptacle d'accouplement (5) et d'un élément d'accouplement (26) côté saillie sur la saillie d'accouplement s'engageant dans le réceptacle d'accouplement (5), dans lequel les éléments d'accouplement (26, 33) sont commutables au moyen d' un dispositif de commutation dans un état d'accouplement où les deux composants (2, 3) sont fixés entre eux par les éléments d'accouplement (26, 33) et
• comportant un dispositif de verrouillage qui peut être commuté dans un état verrouillé, dans lequel le dispositif de verrouillage bloque les éléments d'accouplement (26, 33) commutés dans l'état d'accouplement contre la sortie de l'état d'acouplement, et qui présente comme élément de verrouillage un piston de verrouillage (8) qui est guidé de manière mobile dans un cylindre de verrouillage (7) vers une position de verrouillage affectée à l'état verrouillé du dispositif de verrouillage,
• un dispositif de détection de position (42) étant prévu pour le piston de verrouillage (8) du dispositif de verrouillage, au moyen duquel il est possible de déterminer si le piston de verrouillage (8) est déplacé dans la position de verrouillage ou non,
• le dispositif de détection de position (42) comprenant une chambre de mesure (40) et un manomètre (39),
• la chambre de mesure (40) étant rendue étanche au moyen du piston de verrouillage (8) déplacé en position de verrouillage, et la pression interne de la chambre de mesure (40) ayant une valeur de consigne lorsque le piston de verrouillage (8) est déplacé en position de verrouillage,
• la pression interne de la chambre de mesure (40) pouvan être mesurée à l'aide du manomètre (39) et
• un tourillon d'accouplement (4) sous la forme d'un tourillon creux étant prévu comme saillie d'accouplement, et une partie longitudinale (6) du tourillon d'accouplement (4) formant le cylindre de verrouillage (7) pour guider le piston de verrouillage (8), un axe de déplacement (9) du piston de verrouillage (8) s'étendant dans la direction longitudinale du tourillon d'accouplement (4),
**caractérisé en ce**
**que** le tourillon d'accouplement (4) est sous la forme d'un tourillon creux cylindrique et un espace interne du cylindre de verrouillage (7) est limité, sur le côté dirigé vers le composant (2) associé au tourillon d'accouplement (4), par un collet intérieur (17) du tourillon d'accouplement (4),
**que** le collet intérieur (17) du tourillon d'accouplement (4) entoure une ouverture de passage cylindrique et délimite un espace de montage (18) sur le côté opposée à l'espace interne du cylindre de verrouillage (7), dans lequel est vissé un dispositif de rappel (19) comportant un cylindre de rappel (20) dont la paroi externe présente une liaison par vis avec le tourillon d'accouplement (4), et comportant un piston de retour (21) guidé à l'intérieur du cylindre de retour (20), une bague d'étanchéité (22) étant disposé entre le collet intérieur (17) du tourillon d'accouplement (4) et une surface frontale opposée du cylindre de retour (20),
**que** le piston de retour (21) du dispositif de retour (19) est muni d'une tige de piston (23) qui traverse l'ouverture de passage présente sur le collet intérieur (17) du tourillon d'accouplement (4) avec du jeu radial,
**que** le piston de verrouillage (7), guidé dans l'espace interne du cylindre de verrouillage, est chargé par un ressort (10) sur une surface frontale disposée vers l'extrémité libre du tourillon d'accouplement (4) et est équipé, sur le côté dirigée vers le premier composant (2) associé à la saillie d'accouplement (4), d'un cône s'effilant vers le premier composant (2), à partir duquel une saillie d'étanchéité cylindrique (13) s'étend qui, de son côté, présente une section axiale (14) avec un diamètre relativement large et, s'y raccordant, une section axiale (15) avec un diamètre réduit, avec un joint torique (16) disposé sur la section axiale (15) avec un diamètre réduit et reposant sur une surface en gradin formée à la transition entre la section axiale (14) avec un diamètre relativement large et la section axiale (15) avec un diamètre réduit,
**que**, lors que le piston de verrouillage (8) est dans la position de verrouillage,
• la section axiale à diamètre réduit (15) de la saillie d'étanchéité cylindrique (13) du piston de verrouillage (8) pénètre dans l'ouverture de passage du collet intérieur (17) du tourillon d'accouplement (4),
• la surface en gradin à la transition entre la section axiale (14) de diamètre relativement large et la section axiale (15) de diamètre réduit de la saillie d'étanchéité cylindrique (13) est pressée sous l'action du ressort (10) agissant sur le piston de verrouillage (8) contre le bord de l'ouverture de passage du collet intérieur (17) du tourillon d'accouplement (4), et le joint torique (16) disposé entre la surface en gradin et le collet intérieur (17) déploie son étanchéité en raison de la pression exercée,
• sur le côté du collet intérieur (17) du tourillon d'accouplement (4) opposé au joint torique (16), le piston de retour (21) du dispositif de retour (19) presse la bague d'étanchéité (22) contre le collet intérieur (17) de telle sorte que la bague d'étanchéité (22) exerce également un effet d'étanchéité, et
• le joint torique (16) d'un côté et la bague d'étanchéité (22) de l'autre côté du collet intérieur (17) du tourillon d'accouplement (4) scellent un espace annulaire (36) qui est formé, en raison du jeu radial entre la tige de piston (23) du piston de retour (21) et le collet intérieur (17) entre la paroi extérieure de la tige de piston (23) et la paroi de l'ouverture de passage au collet intérieur (17),
**que**, dans l'espace annulaire (36) entre la paroi extérieure de la tige de piston (23) du piston de retour (21) et la paroi de l'ouverture de passage sur le collet intérieur (17) du tourillon d'accouplement (4) débouche une conduite de pression (37) par laquelle l'espace annulaire (36) est connecté à un générateur de vide (38), le manomètre (39) du dispositif de détection de position (42) étant prévu dans la conduite de pression (37) entre le générateur de vide (38) et l'espace annulaire (36),
**que** l'espace annulaire (36) entre la paroi externe de la tige de piston (23) du piston de retour (21) et la paroi de l'ouverture de passage sur le collet intérieur (17) du tourillon d'accouplement (4) constitue, avec la conduite de pression (37), l'espace de mesure (40) du dispositif de détection de position (42) et
**que** le générateur de vide (38) permet de produire la valeur consigne de la pression interne dans l'espace de mesure (40) sous forme d'une dépression lorsque le piston de verrouillage (8) est déplacé dans la position de verrouillage et que le manomètre (39) mesure, dans la conduite de pression (37), la pression interne de l'espace de mesure (40) formée comme dépression.

2. Dispositif d'accouplement selon la revendication 1, **caractérisé en ce que** le dispositif de détection de position (42) pour le piston de verrouillage (8) du dispositif de verrouillage comprend un dispositif d'évaluation (41) au moyen duquel une position réelle du piston de verrouillage (8) détectée par le dispositif de détection de position (42) peut être comparée avec la position de verrouillage par une comparaison de positions, et au moyen duquel un signal de commande pour une unité fonctionnelle (43) du dispositif mécanique munie du dispositif d'accouplement peut être généré comme fonction du résultat de la comparaison de positions.

3. Dispositif d'accouplement selon l'une des revendications précédentes, **caractérisé en ce qu'**au moins l'un des éléments d'accouplement (26, 33) peut être amené dans une position d'accouplement au moyen du dispositif de commutation des éléments d'accouplement (26, 33) et les éléments d'accouplement (26, 33) peuvent ainsi être mis en état d'accouplement, et que le piston de verrouillage (8) du dispositif de verrouillage forme un élément de commutation du dispositif de commutation des éléments d'accouplement (26, 33), que, suite au mouvement effectué par le piston de verrouillage (8) pour se mettre en position de verrouillage, l'élément d'accouplement (26, 33) concerné est amovible en position d'accouplement.

4. Dispositif d'accouplement selon la revendication 3, **caractérisé en ce que** le piston de verrouillage (8) du dispositif de verrouillage est relié à l'élément d'accouplement concerné (26, 33) par l'intermédiaire d'un mécanisme à clavette ayant au moins une surface de clavette inclinée par rapport à la direction de déplacement du piston de verrouillage (8) et **en ce que**, au moyen du mécanisme à clavettes, il est possible de transformer un mouvement du piston de verrouillage (8) dans la position de verrouillage dans un mouvement de l'élément d'accouplement (26, 33) concerné dans la position d'accouplement, le mouvement de l'élément d'accouplement (26, 33) concerné étant dirigé dans le sens transversal par rapport à la direction de mouvement du piston de verrouillage (8).

5. Dispositif d'accouplement selon la revendication 4, **caractérisé en ce qu'**ils sont prévus une surface de verrouillage (35) au piston de verrouillage (8), la surface de verrouillage (35) s'étendant dans la direction de mouvement du piston de verrouillage (8), ainsi qu'une surface d'engrenage (12) du mécanisme à clavette comme élément du mécanisme à clavette, de préférence une surface d'engrenage (12) sous forme d'une surface de clavette inclinée par rapport à la direction de mouvement du piston de verrouillage (8), dans lequel la surface d'engrenage (12) du mécanisme à clavette et la surface de verrouillage (35) du piston de verrouillage (8) sont positionnées d'une telle façon que la surface d'engrenage (12) du mécanisme à clavette devance la surface de verrouillage (35) lors du mouvement du piston de verrouillage (8) dans la position de verrouillage et que l'élément d'accouplement (26, 33) concerné s'appuie, en position d'accouplement, sur la surface de verrouillage (35) du piston de verrouillage (8) avec une force d'appui dont la ligne d'action s'étend essentiellement perpendiculaire à la surface de verrouillage (35).

6. Dispositif d'accouplement comprenant une pluralité de dispositifs d'accouplement (1), **caractérisé en ce que** les dispositifs d'accouplement (1) sont formés selon l'une des revendications précédentes.

7. Dispositif d'accouplement selon la revendication 6, **caractérisé en ce que** les dispositifs de détection de position (42) pour les pistons de verrouillage (8) des dispositifs de verrouillage (1) présentent une chambre de mesure commune (40) et un manomètre commun (39), dans lequel la chambre de mesure commune (40) est rendue étanche au moyen des pistons de verrouillage (8) mis en position de verrouillage et la pression intérieure de la chambre de mesure commune (40) présentant une valeur de consigne lorsque les pistons de verrouillage (8) sont déplacés en position de verrouillage, et que la pression interne de la chambre de mesure commune (40) peut être déterminée au moyen du manomètre commun (39).
